# EUROPÄISCHE PATENTANMELDUNG

(11) **EP 4 311 836 A2**
(43) Veröffentlichungstag der Anmeldung: **31.01.2024**
(21) Anmeldenummer: 23188089.9
(22) Anmeldetag: 27.07.2023
(51) Int. Cl.: C08G 18/10, C08G 18/28, C08G 18/32, C08G 18/36, C08G 18/42, C08G 18/48, C08G 18/50, C08G 18/63, C08G 18/76, E01C 1/00, C08L 75/02, C08L 75/06, C08L 75/08, C08L 95/00

(54) **KOMPOSITMATERIAL, ABDICHTUNGSSYTEM, STRASSENBAUWERK, VERWENDUNG EINES BINDEMITTELS UND VERFAHREN ZUM BEREITSTELLEN EINES ABDICHTUNGSSYSTEMS**

(30) Priorität: 29.07.2022 DE 102022119075
(71) Anmelder: KLB Kötztal Lacke + Beschichtungen GmbH, 89335 Ichenhausen (DE)
(72) Erfinder: Bestler, Petra, 89335 Ichenhausen (DE); Haseidl, Michael, 89335 Ichenhausen (DE); Martin, Dennis, 89335 Ichenhausen (DE); Kehrle, Julian, 89335 Ichenhausen (DE)
(74) Vertreter: Manitz Finsterwald Patent- und Rechtsanwaltspartnerschaft mbB

(57) **Zusammenfassung**

Die vorliegende Erfindung betrifft ein Kompositmaterial, für die Abdichtung von Fahrbahnen, umfassend eine poröses Traggerüst, dessen Poren mit einem Bindemittel verfüllt sind, wobei das ausgehärtete Bindemittel eine Glasübergangstemperatur (Tg) von kleiner gleich 10 °C, insbesondere kleiner gleich 5 °C, aufweist und/oder wobei das rheologische Verhalten des Bindemittels im unausgehärteten Zustand thixotrop ist. Ferner betrifft die vorliegende Erfindung ein Abdichtungssytem, umfassend ein derartiges Kompositmaterial, ein Straßenbauwerk mit einem derartigen Abdichtungssystem, die Verwendung eines Bindemittels zur nachträglichen Verfüllung einer porösen Tragstruktur sowie ein Verfahren zum Bereitstellen eines Abdichtungssystems.

## Beschreibung

Die Erfindung betrifft ein Kompositmaterial, ein Abdichtungssytem, ein Straßenbauwerk, eine Verwendung eines Bindemittels zur Verfüllung eines porösen Traggerüsts sowie ein Verfahren zum Bereitstellen eines Abdichtungssystems.

Eine häufige Ursache für Schäden an Straßenbrücken liegt darin, dass eine unter einer Asphaltfahrbahn vorgesehene Abdichtungsschicht schadhaft ist und Wasser, Frost sowie Tausalze die unter der Abdichtungsschicht liegende Bauwerksstruktur angreifen können. Bei Betonbrücken führt eine beschädigte Abdichtungsschicht zu einem Ablösen des Betons, wodurch darin eingebetteter Bewehrungsstahl freigelegt wird und korrodiert. Dies führt dazu, dass eine Vielzahl an Brücken und Brückenabschnitten in den nächsten Jahren saniert werden muss.

Die Sanierung von Betonbrücken erfordert es, dass zumindest ein Teil der Fahrbahn oder gar die ganze Brücke gesperrt werden muss, damit die Fahrbahn mechanisch abgetragen, die darunter liegende Betonschicht wiederhergestellt und eine neue Abdichtung auf der Brücke, z. B. in Form von Brückengrundierungen und Bitumenschweißbahnen oder anhand von Flüssigkunststoffabdichtungen, aufgebracht werden kann, bevor ein neuer Deckasphalt aufgebracht wird. Die Sanierung von Stahlbrücken und anderen Ingenieurbauwerken aus Beton läuft ähnlich ab. Typischer Weise dauern diese Sanierungen mehrere Wochen. Zusätzlich zu den direkten Kosten der Sanierung ergeben sich durch die erforderlichen Sperrungen enorme volkswirtschaftliche Kosten.

Zur schnelleren Sanierung von Betonbrücken wurde daher ein Verfahren entwickelt, bei welchem nach dem Abtragen der Fahrbahn und einem Wiederherstellen der Betonschicht als Abdichtungssystem zunächst eine poröse asphaltbasierte Schicht mit 17 - 25 Vol.-% Luftporen aufgebracht wird. Die Luftporen dieser Schicht werden dann nachträglich mit einem 2-Komponenten Epoxidharz verfüllt. Das resultierende Kompositmaterial aus Asphalt und Epoxidharz stellt ein Abdichtungssytem bereit, welches sich wesentlich schneller aufbringen lässt als andere bekannte Abdichtungen, z. B. auf Basis von Bitumenschweißbahnen oder Flüssigkunststoffen.

Dennoch besteht ein Bedarf, das resultierende Kompositmaterial hinsichtlich seiner Eigenschaften insbesondere bei tiefen Temperaturen zu verbessern, damit dieses schnellere Verfahren auch zur Sanierung von Stahl-, Holz- und (Stahl)betonbrücken geeignet ist. Ein weiterer Bedarf besteht darin, die Verfüllung der porösen Asphaltgrundstruktur zu vereinfachen.

Die vorliegende Erfindung löst diesen Bedarf dadurch, dass ein Kompositmaterial, für ein Abdichtungssystem, umfassend ein poröses Traggerüst, bereitgestellt wird, wobei die Poren des Traggerüsts mit einem Bindemittel verfüllt sind. Erfindungsgemäß ist die Glasübergangstemperatur (Tg) des Bindemittels so eingestellt, dass diese im ausgehärteten Zustand des Bindemittels kleiner gleich 10 °C, insbesondere kleiner gleich 5 °C, beträgt und/oder das rheologische Verhalten des Bindemittels im unausgehärteten Zustand ist so eingestellt, dass sich das Bindemittel strukturviskos mit Fließgrenze oder thixotrop verhält.

Die Einstellung der Tg auf die genannten Werte führt dazu, dass das Bindemittel auch bei Temperaturen unterhalb der Tg noch elastische bzw. viskoelastische Eigenschaften aufweist. Hierdurch ist eine Rissüberbrückung auch bei tiefen Temperaturen möglich, sodass eine Abdichtungswirkung im Verbund mit dem Traggerüst, insbesondere Asphalt, auch bei tiefen Temperaturen gegeben ist. Das Bindemittel gemäß der vorliegenden Erfindung verhält sich nach dem Aushärten entweder tieftemperaturelastisch oder tieftemperaturviskoelastisch, sodass das Kompositmaterial auch auf stark schwingenden Bauwerken, insbesondere bei Stahl- und Holzbrücken, selbst im Winter als Abdichtung eingesetzt werden kann. Bei Temperaturen oberhalb der Tg erhöht sich der elastische Anteil signifikant, sodass auch hier die erwünschte Abdichtungswirkung und Flexibilität gegeben ist.

Durch das thixotrope bzw. strukturviskose Verhalten des flüssigen, verarbeitungsfertigen Materials ist alternativ bzw. zusätzlich zu der verbesserten Rissüberbrückung eine verbesserte Verarbeitbarkeit gegeben. Die Einstellung der thixotropen rheologischen Eigenschaften vereinfacht die Verfüllung der Poren des Traggerüsts wesentlich und erlaubt auch die Verfüllung des porösen Traggerüsts, wenn das Bauwerk ein deutliches Gefälle aufweist. Das Bindemittel mit thixotropem Verhalten kann auf einem porösen Traggerüst aufgebracht werden, wobei das Bindemittel allenfalls geringfügig abläuft. Durch Scherkräfte, welche beispielsweise durch ein Verteilen des Bindemittels mit einem Gummischieber entstehen, sinkt die Viskosität und das Bindemittel verfüllt die Poren des Traggerüsts vollständig. Das thixotrope Verhalten erlaubt es, das Kompositmaterial der vorliegenden Erfindung auch bei Bauwerken mit starken Gefällen, wie einigen Brücken, aber auch bei Bushaltestellen, als Abdichtung bereitzustellen. Ohne die Einstellung der thixotropen Eigenschaften muss die Verfüllung in der Regel vom tiefsten Punkt eines zu sanierenden Bauwerks erfolgen und die Anwendbarkeit ist limitiert auf ein geringes Gefälle des Bauwerks.

Dem Fachmann sind zahlreiche Möglichkeiten bekannt, die Tg des Bindemittels auf den gewünschten Wert einzustellen. Beispielhaft und nicht einschränkend kann dies durch die Auswahl des Bindemittels, durch den Zusatz von Weichmachern oder Ölen, durch den Vernetzungsgrad des ausgehärteten Bindemittels und andere dem Fachmann bekannte Mittel erfolgen.

Ebenfalls sind dem Fachmann verschiedene Möglichkeiten bekannt, wie die Thixotropie bzw. Strukturviskosität mit Fließgrenze, d. h. das rheologische Verhalten, des Bindemittels eingestellt werden kann. Thixotropes Verhalten entsteht beispielsweise durch Verknäuelungen von Polymerketten des Bindemittels, welche die Viskosität des Bindemittels dadurch erhöhen, dass sie die Bewegung der Polymerketten relativ zueinander einschränken. Durch eine Scherbelastung kann eine Entknäuelung der Polymerketten erfolgen, sodass die Viskosität herabgesetzt wird. Nach einem Wegfall der Scherbelastung verknäueln die Polymerketten wieder, sodass die Viskosität des Bindemittels ansteigt. Thixotropes Verhalten kann allerdings auch auf andere Weise entstehen, wie durch physikalische Wechselwirkungen zwischen den Bestandteilen des Bindemittels. Ein Beispiel für derartige physikalische Wechselwirkungen sind sekundäre Bindungen, wie insbesondere Wasserstoffbrückenbindungen. Ohne Vorliegen einer Scherbelastung erhöhen diese Wechselwirkungen den Zusammenhalt der Bindemittelbestandteile, sodass eine hohe Viskosität vorliegt. Bei Scherbelastungen werden diese Wechselwirkungen jedoch vorübergehend gebrochen, sodass die Viskosität abnimmt. Nach Wegfall der Scherbelastung bilden sich diese Wechselwirkungen erneut aus, sodass die Viskosität wieder steigt und ein thixotropes Verhalten beobachtbar ist.

Bei dem porösen Traggerüst des erfindungsgemäßen Kompositmaterials handelt es sich vorzugsweise um bituminös gebundene Asphaltkörnung. Die Dicke des porösen Traggerüsts ist nicht weiter limitiert, liegt jedoch vorzugsweise im Bereich von 0,5 - 10 cm, bevorzugter im Bereich von 1,0 - 5,0 cm.

Gemäß der vorliegenden Erfindung handelt es sich bei dem Bindemittel vorzugsweise um ein polymeres Bindemittel. Polymere Bindemittel lassen sich besonders einfach hinsichtlich ihrer Tg im ausgehärten Zustand und ihrer rheologischen Eigenschaften thixotrop einstellen.

Insbesondere sieht die vorliegende Erfindung vor, die Tg des ausgehärteten Bindemittels auf bevorzugt kleiner gleich 5 °C, besonders bevorzugt kleiner gleich 0 °C, noch weiter bevorzugt kleiner gleich -5 °C, insbesondere bevorzugt kleiner gleich -10 °C, noch bevorzugter kleiner gleich -20 °C, höchst bevorzugt kleiner gleich -30 °C einzustellen. Die Tg kann mittels DSC-Messungen bei einer Heizrate von 5 K/min oder auch mittels Zug-Dehnungs-Messungen bestimmt werden, insbesondere mittels der genannten DSC-Messung. In Ausnahmefällen kann die Tg in einer DSC-Messung nur schwach erkennbar sein, wobei dann die Tg mittels Zug-Dehnungs-Messungen bei unterschiedlichen Temperaturen bestimmbar ist. Nach Unterschreiten der Tg sind weiterhin vorteilhafte Rissüberbrückungseigenschaften vorhanden, insbesondere wenn das Bindemittel mit Weichsegmenten, insbesondere auf Polyurea-Basis, modifiziert ist.

Bei dem porösen Traggerüst kann es sich um unterschiedliche poröse Strukturen handeln, welche mit dem Bindemittel verfüllbar sind. Als geeignet hat sich eine poröse Asphaltschicht herausgestellt, da diese relativ einfach und schnell mit einem Straßenfertiger auf großen Flächen bereitstellbar ist und anschließend, ggf. nach einem Glätten mit einer Walze, verfüllt werden kann. Das poröse Traggerüst, insbesondere die genannte poröse Asphalt-Schicht, weist vorzugsweise eine Porosität von 10 - 40 Vol.-%, insbesondere von 17 - 28 Vol.-%, auf. Bei Porositäten oberhalb des angegebenen Bereichs wird mehr Bindemittel benötigt, um die vorhandenen Poren zu verfüllen. Bei Porositäten unterhalb des angegebenen Bereichs nimmt der Anteil sehr kleiner Poren zu, welche sich nur schwierig mit Bindemittel verfüllen lassen, sodass eine vollständige Dichtheit schwieriger bereitzustellen sein könnte. Vorzugsweise sind bei der vorliegenden Erfindung die Poren des Traggerüsts im Wesentlichen vollständig mit Bindemittel verfüllt, um eine besonders gute Abdichtung zu erzielen, besonders bevorzugt erfolgt die Verfüllung der Poren des Traggerüsts zu mindestens 90 Vol.-%, insbesondere zu mindestens 92 Vol.-%, bezogen auf das Porenvolumen der Asphaltschicht.

Grundsätzlich lassen sich bei der vorliegenden Erfindung unterschiedlichste Bindemittel einsetzen, vorausgesetzt die Tg und/oder die Thixotropie lassen sich entsprechend einstellen. Gemäß einer bevorzugten Ausgestaltung des erfindungsgemäßen Kompositmaterials ist das Bindemittel ausgewählt aus der Gruppe bestehend aus Polyurethan-, Polyurea-, Polyarspatic- und PMMA-basierten Harzen, Siliconen, Silan-terminierten Polyurethanen, Polyisocyanaten und deren Präpolymere sowie aus Hybriden der genannten Bindemittel, vorzugsweise ausgewählt aus der Gruppe bestehend aus Polyurethan-, Polyurea-, und PMMA-basierten Harzen sowie aus Hybriden der genannten Bindemittel. Insbesondere Bindemittel, die Polyurethan- und/oder Polyurea-Segmente aufweisen haben sich im Zusammenhang mit der vorliegenden Erfindung als besonders geeignet erwiesen, die Tg auf die gewünschten Temperaturen einzustellen. Da die Polyurethan- sowie die Polyurea-Segmente in der Lage sind, Wasserstoffbrückenbindungen auszubilden, lässt sich bei Bindemitteln mit Polyurethan- und/oder Polyurea-Segmenten, ein thixotropes Verhalten leicht einstellen.

Gemäß einer bevorzugten Ausgestaltung des erfindungsgemäßen Kompositmaterials ist das Bindemittel ein 1-Komponenten- oder ein Mehrkomponentensystem. Besonders bevorzugt ist das Bindemittel ein Mehrkomponentensystem, insbesondere ein 2-Komponentensystem.

Insbesondere ist das ausgehärtete Bindemittel des erfindungsgemäßen Kompositmaterials ein mit einem Diisocyanat, insbesondere MDI-Präpolymer oder -Oligomer oder TDI-Präpolymer, gehärtetes Polyurethan, wobei das Polyurethan vorzugsweise mit einem Polyharnstoff modifiziert ist. Alternativ ist bei dem erfindungsgemäßen Kompositmaterial das ausgehärtete Bindemittel ein Polyurea-Material, welches Amin-basiert ist und mit einem Diisocyanat-basiertem Härter, insbesondere TDI- oder auch einem MDI-Präpolymer, gehärtet ist. Als Härter des Bindemittels der vorliegenden Erfindung sind Diisocyanat-basierte Härter mit einem zahlengemittelten Molekulargewicht im Bereich von 250 - 3500 g/mol bevorzugt.

Um die niedrige Tg einzustellen und besonderes gute Rissüberbrückungseigenschaften zu erzielen, basiert das Bindemittel des erfindungsgemäßen Kompositmaterials im Wesentlichen nicht auf Epoxidharzen, d. h. ist im Wesentlichen frei von Epoxidharzen.

Zur Einstellung der Thixotropie ist dem Bindemittel des erfindungsgemäßen Kompositmaterials vorzugsweise zumindest ein Thixotropiemittel zugesetzt. Der Einsatz eines Thixotropiemittels ist jedoch nicht zwingend erforderlich, wenn beispielsweise das Bindemittel an sich bereits die erwünschte Thixotropie aufweist, beispielsweise aufgrund der besonderen Verknäuelung der Polymerketten oder der Fähigkeit der Bindemittelmoleküle sekundäre Wechselwirkungen, wie Wasserstoffbrückenbindungen, auszubilden. Das Thixotropiemittel ist nicht beschränkt und kann in Abhängigkeit von dem Bindemittel ausgewählt werden. Dem Fachmann sind hierfür entsprechende Thixotropiemittel als Rheologieadditive hinlänglich bekannt und kommerziell verfügbar. Die Menge an Thixotropiemittel(n), welche notwendig ist, um ein thixotropes Verhalten des Bindemittels zu erzielen, kann sehr gering sein. Bei der vorliegenden Erfindung beträgt die Menge des Thixotropiemittels vorzugsweise mindestens 0,01 Gew.-%, bevorzugter mindestens 0,05 Gew.-%, noch bevorzugter mindestens 0,1 Gew.-%, jeweils bezogen auf das Gesamtgewicht des Bindemittels. Ferner beträgt der Gehalt des Thixotropiemittels vorzugsweise höchstens 5 Gew.-%, bevorzugter höchstens 2 Gew.-%, noch bevorzugter höchstens 1 Gew.-%, noch weiter bevorzugter höchstens 0,6 Gew.-%, jeweils bezogen auf das Gesamtgewicht des Bindemittels.

Das Bindemittel des erfindungsgemäßen Kompositmaterials kann gemäß einer bevorzugten Ausgestaltung einen Füllstoff umfassen. Ein beispielhafter Füllstoff ist Sand.

Insbesondere ist bei dem Kompositmaterial der vorliegenden Erfindung das Bindemittel für den Gefügeverbund mit bituminös gebundener Asphaltkörnung optimiert. Die Optimierung erfolgt insbesondere durch eine Einstellung der Viskosität des Bindemittels, um die Penetration ins Gefüge des Traggerüsts zu optimieren. Dass bei dem Kompositmaterial der vorliegenden Erfindung ein Bindemittel mit tieftemperaturelastischen Bestandteilen eingesetzt wird, optimiert den Gefügeverbund mit bituminös gebundener Asphaltkörnung weiter. Eine weitere Optimierung des Gefügeverbunds mit bituminös gebundener Asphaltkörnung kann insbesondere dadurch erreicht werden, indem dem Bindemittel Haftvermittler hinzugefügt werden, welche die Haftung auf Beton und Asphalt erhöhen.

Für eine besonders dauerhafte abdichtende Wirkung des Kompositmaterials und die Eignung, auch bei stark schwingenden Bauwerken, wie Stahl- und Holzbrücken, eingesetzt zu werden, weist das Bindemittel im ausgehärteten Zustand vorzugsweise eine Reißdehnung von größer gleich 50 % bei Raumtemperatur auf. (Messung der Spannung-Dehnung nach DIN EIN ISO 527, bzw. DIN 5350). In diesem Zusammenhang weist das Bindemittel ebenfalls vorzugsweise im ausgehärteten Zustand eine Reißdehnung von größer gleich 4 % bei -20 °C auf. (Messung der Spannung-Dehnung nach DIN EIN ISO 527, bzw. DIN 5350)

Das erfindungsgemäße Kompositmaterial weist vorzugweise eine Rissüberbrückungsfähigkeit nach dem Aushärten des Bindemittels bei -20 °C von größer 0,1 mm, bevorzugt von größer 0,2 mm, insbesondere bevorzugt von größer oder gleich 0,3 mm. Ferner ist es bevorzugt, dass das die Rissüberbrückungsfähigkeit des erfindungsgemäßen Kompositmaterials bei 23 °C größer 0,2 mm beträgt. Die Rissüberbrückungsfähigkeit wird, wie von Dudenhöfer und Rückert im "Bericht zum Forschungsprojekt 15.0567 Kunststoffabdichtungen unter Brückenbelägen" (ISBN 978-3-95606-655-9) beschrieben, bestimmt.

Bei dem erfindungsgemäßen Kompositmaterial weist das Bindemittel vorzugsweise eine dauerhafte Temperaturstabilität bis 80 °C, insbesondere bis 90 °C, auf. Ferner ist es bevorzugt, wenn das Bindemittel eine kurzzeitige Temperaturstabilität bis 140 °C, insbesondere bis 160 °C oder gar bis insbesondere 200 °C, aufweist. Eine derartige kurzzeitige Temperaturstabilität ist vorteilhaft, sofern die Bindemittel in ein noch heißes Traggerüst verfüllt werden oder das erfindungsgemäße Kompositmaterial nach der Verfüllung mit weiteren Schichten, insbesondere mit Asphaltschichten, bedeckt wird.

Eine dauerhafte Temperaturstabilität bis zu einer gewissen Temperatur bezeichnet hierin die Temperatur, auf welche das Bindemittel für einen Zeitraum von wenigstens 24 h unter einer Luftatmosphäre erhitzt werden kann, ohne dass ein Massenverlust von größer gleich 5 % auftritt. Eine kurzzeitige Temperaturstabilität bis zu einer gewissen Temperatur bezeichnet hierin die Temperatur, bei welcher in einer thermogravimetrischen Analyse (TGA), gemessen wie in den Beispielen, ein Gewichtsverlust mehr als 5 % beträgt.

Ebenfalls Bestandteil der vorliegenden Erfindung ist ein Abdichtungssytem, umfassend ein Kompositmaterial, wie hierin als erfindungsgemäß beschrieben.

Ferner betrifft die vorliegende Erfindung ein Straßenbauwerk, umfassend ein Kompositmaterial der vorliegenden Erfindung, d. h. wie oben und in den Ansprüchen beschrieben, wobei das Kompositmaterial als Abdichtungsschicht zwischen der Bauwerksstruktur und einem auf dem Kompositmaterial aufgebrachten Fahrbahnbelag angeordnet ist.

Bei dem Straßenbauwerk der vorliegenden Erfindung handelt es sich vorzugsweise um eine Stahl-, Beton- oder Holzbrücke. Durch die besonders tiefe Tg des Bindemittels wird auch bei Bauwerken, die stark schwingen, wie Stahl- und Holzbrücken, eine zuverlässige langanhaltende Abdichtwirkung erzielt. Die besonders eingestellten rheologischen Eigenschaften lassen auch die Anbringung des erfindungsgemäßen Kompositmaterials bei Straßenbauwerken zu, welche ein hohes Gefälle aufweisen.

Gemäß einer bevorzugten Ausgestaltung der vorliegenden Erfindung ist das Kompositmaterial zumindest abschnittsweise ohne weitere Grundierung auf der Bauwerksstruktur aufzubringen bzw. aufgebracht. Diese Anordnung ohne weitere Grundierung lässt eine noch schnellere Bereitstellung des Kompositmaterials auf einem zu sanierenden Straßenbauwerk zu, wodurch mögliche Streckensperrungen verkürzt werden können.

Zudem betrifft die vorliegende Erfindung die Verwendung des hierin beschriebenen Bindemittels zur nachträglichen Verfüllung einer porösen Tragstruktur bei der Herstellung eines Abdichtungssystems, wie oben beschrieben, d. h. insbesondere einer porösen bituminös gebundenen Asphaltkörnung vorzugsweise mit der oben genannten Porosität.

Ein weiterer Aspekt der vorliegenden Erfindung betrifft ein Verfahren zum Bereitstellen eines Abdichtungssystems, insbesondere bei der Sanierung eines Bauwerks, wie zum Beispiel einem Brückenbauwerk. Bei dem erfindungsgemäßen Verfahren wird auf einer bestehenden Gebäudestruktur zunächst eine poröse Tragstruktur, insbesondere eine porösen bituminös gebundenen Asphaltkörnung, vorzugsweise mit der oben genannten Porosität, bereitgestellt. Anschließend wird die poröse Tragstruktur mit einem unausgehärteten Bindemittel verfüllt, wobei das Bindemittel nach dem Verfüllen aushärtet. Hierbei ist eine Glasübergangstemperatur (Tg) des Bindemittels so eingestellt, dass diese im ausgehärteten Zustand des Bindemittels kleiner gleich 10 °C, insbesondere kleiner gleich 5 °C, beträgt und/oder das rheologische Verhalten des Bindemittels im unausgehärteten Zustand ist so eingestellt, dass sich das Bindemittel strukturviskos mit Fließgrenze oder thixotrop verhält.

Fluide mit Fließgrenze werden auch als Bingham Fluide bezeichnet.

Sofern nicht ausdrücklich angegeben, beziehen sich sämtliche hierin erwähnte Normen auf die zum 1. Juni 2022 gültigen Normen.

Nachfolgend wird die Erfindung zur Veranschaulichung anhand von beispielhaften Kompositmaterialien und Figuren beschrieben, wobei die vorliegende Erfindung jedoch nicht auf diese Beispiele und Figuren beschränkt ist.

In den Figuren zeigt:
- Fig. 1:: Spannungs-Dehnungs-Kurven eines Urethan-basierten Bindemittels eines Kompositmaterials gemäß der vorliegenden Erfindung bei 23 °C, -20 °C und -30 °C,
- Fig. 2:: eine Spannungs-Dehnungs-Kurve eines Urea-basierten Bindemittels eines Kompositmaterials gemäß der vorliegenden Erfindung bei 23 °C,
- Fig. 3:: eine Spannungs-Dehnungs-Kurve des Urea-basierten Bindemittels von Fig. 2 bei -30 °C,
- Fig. 4:: Spannungs-Dehnungs-Kurven eines Epoxid-basierten Bindemittels des Vergleichsbeispiels bei 23 °C, -20 °C und -30 °C,
- Fig. 5:: eine thermogravimetrische Analyse des Bindemittels von Fig. 1,
- Fig. 6:: eine thermogravimetrische Analyse des Bindemittels von Fig. 2 und 3,
- Fig. 7:: eine thermogravimetrische Analyse des Bindemittels von Fig. 4.
- Fig. 8:: eine DSC-Analyse des Bindemittels von Fig. 1,
- Fig. 9:: eine DSC-Analyse des Bindemittels von Fig. 2 und 3,
- Fig. 10:: eine DSC-Analyse des Bindemittels von Fig. 4, sowie
- Fig. 11:: mittels DSR aufgezeichnete Kurven der Bindemittel von Fig. 1 bis 3 sowie von Asphalt.

### Beispiel 1: Polyurethan-basierte Bindemittel

Die Komponenten A und B wurden entsprechend der nachfolgenden Tabelle 1 gemischt, um Polyurethan-basierte Bindemittel bereit zu stellen. Die Bestandteile der Komponenten A und B ergeben zusammen 100 Gew.-%.

**Tabelle 1:**

| **Komponente** | **Bestandteil** | **Anteil (Gew.-%)** | **Bevorzugter Anteil (Gew.-%)** |
|---|---|---|---|
| **A** | Verzweigtes Polyester-/Polyetherpolyol | 30 - 70 | 40 - 55 |
| | Trifunktionelles Polyurethanharnstoffhaltiges Polyetherpolyol | 0 - 30 | 15 - 25 |
| | Rizinusöl | 0 - 30 | 10 - 20 |
| | Weichmacher | 1 - 10 | 2 - 5 |
| | Additive* | >0 - 15 | 6 - 13 |
| **B** | Härter: Methandiphenyldiisocyanat-Präpolymere oder -Oligomere | 15 - 45 | 20 - 35 |

| | | | |
|---|---|---|---|
| *Additive beinhalten Thixotropierungsmittel in einer Menge von 0,01 - 0,6 Gew.-% bezogen auf das Gesamtgewicht des Bindemittels (Komponenten A + B). | | | |

Durch Mischen der Komponenten A und B wurde das erfindungsgemäße Bindemittel erhalten. Mit diesem Bindemittel wurde ein auf einem Betongrundkörper (Referenzbeton entsprechend der DIN EN 1766 mit den Abmessungen 32 cm x 26 cm x 4 cm) aufgebrachtes poröses Traggerüst auf Basis von bituminös gebundener Asphaltkörnung (großtechnisch hergestellt und bei 120 °C mit einem Walzsektor-Verdichtungsgerät auf die Betongrundkörper aufgebracht) bei 12 °C, bei 20 °C und bei 60 °C verfüllt. Für Messungen an dem verfüllten Traggerüst an sich wurden Proben hergestellt, die nicht an dem Betongrundkörper aufgebracht waren.

Mit dem Bindemitteln nach Beispiel 1 konnte eine vollständige Penetration des Traggerüsts erreicht werden, d. h. es verblieben im Wesentlichen keine Luftporen im Traggerüst. Ferner sind die Bindemittel nach Beispiel 1 bei Gefälle nicht abgelaufen, was auf die durch das Thixotropiemittel eingestellte rheologische Verhalten zurückzuführen ist. Das verfüllte Traggerüst weist eine Zugfestigkeit von > 0,8 N/mm² auf. Bei -30 °C konnte ein viskoelastisches Verhalten und eine Reißdehnung von 4 % oder mehr beobachtet werden.

### Beispiel 2: Polyurea-basierte Bindemittel

Das Bindemittel des Beispiel 2 wurde entsprechend dem Bindemittel von Beispiel 1 hergestellt, jedoch gemäß der Zusammensetzung nach Tabelle 2. Die Bestandteile der Komponente A in Tabelle 2 wurden so gemischt, dass diese zusammen 100 Gew.-% ergeben. Die Gewichtsangabe von Komponenten B bezieht sich auf 100 Gew.-% der Komponente A.

**Tabelle 2:**

| **Komponente** | **Bestandteil** | **Anteil (Gew.-%)** | **Bevorzugter Anteil (Gew.-%)** |
|---|---|---|---|
| **A** | Aromatisches Diamin¹ | 10 - 60 | 25 - 45 |
| | Weichmacher² | 30 - 80 | 25 - 60 |
| | Beschleuniger³ | 0 - 5 | 0,5 - 3 |
| | Stabilisator | 0 - 5 | 0,5 - 3 |
| | Entschäumer | 2 - 10 | 4 - 9 |
| **B** | TDI Präpolymer⁴ | 200 - 600 | 350 - 500 |

| | | | |
|---|---|---|---|
| 1 Dimethylthiotoluendiamin 2 Diisononylphthalat 3 2-Ethylhexansäure 4 PTMEG 2000 / TDI 80 | | | |

Mit dem Bindemitteln nach Beispiel 2 konnte eine vollständige Penetration des Traggerüsts erreicht werden, d. h. es verblieben im Wesentlichen keine Luftporen im Traggerüst. Das verfüllte Traggerüst weist eine Zugfestigkeit von > 0,6 N/mm² auf. Bei -30 °C konnte ein elastisches Verhalten und eine Reißdehnung von 100 % oder mehr beobachtet werden.

Bei den Bindemitteln der Beispiele 1 und 2 hat sich gezeigt, dass Füllstoff, wie beispielsweise Sand in gewissen Mengen zugesetzt werden können, ohne die Bindemitteleigenschaften grundlegend zu verändern.

### Vergleichsbeispiel: Epoxid-basiertes Bindemittel:

Ein Epoxid-basiertes Bindemittel besteht in der Regel aus geeigneten Epoxidharzen und Reaktivverdünnern, die für die Viskositätseinstellung benötigt werden. Darüber hinaus werden Additive zur Eigenschaftseinstellung verwendet.

Für die Härtung von kalthärtenden 2-Komponenten Epoxidharzen werden geeignete Aminhärter eingesetzt, die in der Regel auf Basis von monomeren Aminen, Amin-Epoxidharzaddukten oder als Blends formuliert werden. Beide Komponenten können sog. Weichmacher, wie Benzylalkohol, enthalten.

Die Elastifizierung von Epoxidharzen kann über langkettige Polyetheramine (Polyoxypropylendiamin), polyurethanmodifizierte Amine, polyurethanmodifizierte Epoxidharze, elastifizierende Reaktivverdünner und/oder Weichmacher erfolgen.

Ein derartiges elastifiziertes Epoxidharz wurde als Vergleichsbeispiel verwendet.

Nachfolgende Tabelle 3 stellt Eigenschaften der Beispiele 1 und 2 sowie des Vergleichsbeispiels gegenüber.

**Tabelle 3:**

| **Eigenschaft** | **Beispiel 1** | **Beispiel 2** | **Vergleichsbeispiel** |
|---|---|---|---|
| Streckdehnung (max., -20 °C) | 4,6 % | nicht bestimmt | entspricht der Reißdehnung |
| Streckdehnung (max., -30 °C) | 4,8 % | entspricht der Reißdehnung | entspricht der Reißdehnung |
| Reißdehnung (23 °C) | 140 % | ≥ 160 % | 47% |
| Reißdehnung (-20 °C) | ≥ ca. 15 % | nicht bestimmt | 4,1 % |
| Reißdehnung (-30 °C) | ≥ ca. 12 % | ≥ 180 % | 2,9 % |
| Verhalten (-30 °C) | viskoelastisch | elastisch | sprödelastisch |
| Tg | -0,8 °C | -54 °C | 13 °C |
| Zugfestigkeit (23 °C) | ca. 16 N/mm² | ca. 12 N/mm² | ca. 12 N/mm² |
| Zugfestigkeit (-20 °C) | ca. 2200 N/mm² | ca. 15 N/mm² | ca. 3200 N/mm² |
| Zugfestigkeit (-30 °C) | ca. 2200 N/mm² | ca. 15 N/mm² | ca. 3700 N/mm² |
| Haftzugfestigkeit verfülltes Traggerüst | > 0,8 N/mm² | > 0,6 N/mm² | > 0,8 N/mm² |
| Temperatur bis 5 % Gewichtsverlust | 249 °C | 244 °C | 124 °C |
| Gewichtsverlust bei 160 °C | 3,0 % | 3,1 % | 8,6 % |
| Gewichtsverlust bei 200 °C | 3,6 % | 3,1 % | 14% |

Die Bestimmung der Reißdehnung und der Streckdehnung erfolgte durch Spannungs-Dehnungs-Messungen nach DIN EN ISO 527 von Proben der ausgehärteten Bindemittel der Beispiele 1 und 2 sowie des Vergleichsbeispiels. Hierbei war die Vorkraft auf 0,1 MPa eingestellt, die Prüfgeschwindigkeit betrug 15 mm/min (Beispiel 1 bei 23 °C, -20 °C und -30 °C) bzw. 150 mm/min (Beispiel 2 bei 23 °C) bzw. 50 mm/min (Beispiel 2 bei -30 °C) bzw. 5 mm/min (Vergleichsbeispiel bei 23 °C, -20 °C und -30 °C), die Einspannlänge bei Startposition betrug 50,00 mm, wobei der anfängliche Abstand der Messfühler an der Probe, d. h. die Messlänge des Standardwegs, 20,00 mm beträgt, was die Nulllänge der Messung ist.

Der Gewichtsverlust wurde mittels TGA-Messungen der Bindemittel bestimmt, indem Proben der Bindemittel mit einer Geschwindigkeit von 5 K/min unter einer Stickstoffatmosphäre aufgeheizt wurden. Entsprechende TGA-Kurven sind in den Figuren gezeigt.

Die Prüfgeschwindigkeit bei Beispiel 1 und insbesondere bei Beispiel 2 konnte aufgrund der hohen Reißdehnung sowie eines ausgeprägten viskosen Längenanteils bzw. elastischer Eigenschaften deutlich höher gewählt werden als beim Vergleichsbeispiel. Für das Vergleichsbeispiel konnte selbst bei sehr langsamer Prüfgeschwindigkeit keine wesentliche Differenz zwischen Streck- und Reißdehnung bestimmt werden. Die Streckdehnung bezieht sich hierin auf die beobachtete Dehnung im Zugmaximum der Kurve, die Reißdehnung ist die Dehnung der Probenkörper bei Abriss. In diesem Bereich treten überwiegend fließende Eigenschaften ohne wesentliche Rückstellung auf. Die Streckdehnung bezeichnet also die Dehnung, bis zum Beobachteten Spannungs-Maximum und ist stets kleiner oder gleich der Reißdehnung. Eine Differenz von Streckdehnung und Reißdehnung ergibt sich bei einem Fließen des Materials nach überwinden der Streckdehnung aber vor Erreichen der Reißdehnung, in diesem Fall weist das Material zumindest viskoelastische Eigenschaften auf. Für den Fall, dass Streckdehnung und Reißdehnung gleich sind, weist das zu untersuchende Material entweder elastische Eigenschaften (hohe Elastizität) auf oder ist starr-elastisch (niedrige Elastizität).

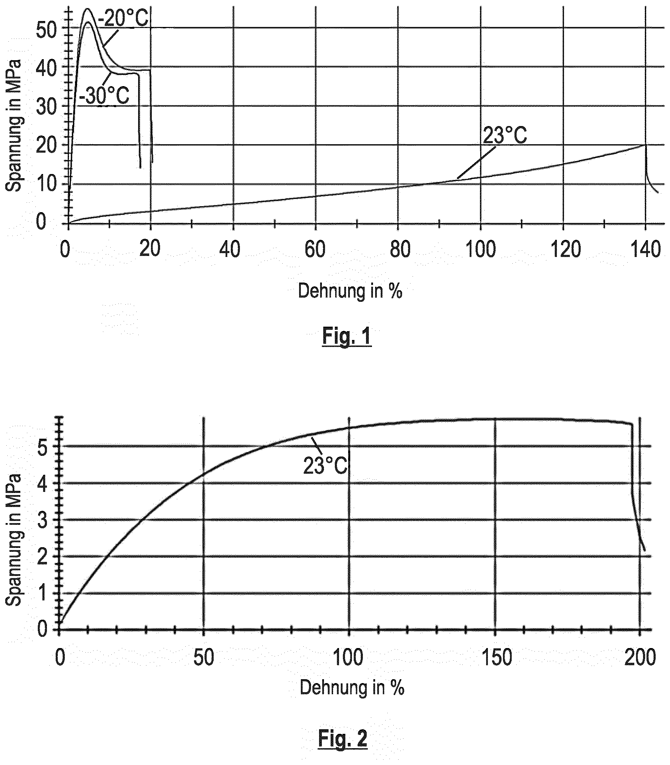

Fig. 1 zeigt die beobachteten Spannung-Dehnungs-Kurven für Beispiel 1 bei 23 °C, -20 °C und -30 °C des Polyurethan-basierten Bindemittels im ausgehärteten Zustand. Die Streckdehnung ist in allen Fällen ist in den Kurven durch einen abrupten Abfall der Spannung zu beobachten. Der viskoelastischer Längenanteil ist der Anteil der Dehnung, welcher durch ein Fließen der Probe bei weiterem Zug eerfolgt. In Fig. 1 lässt sich dieser Anteil insbesondere bei den bei -20 °C und - 30 °C gemessenen Kurven beobachten, wobei der viskoelastische Längenanteil zwischen dem beobachteten Spannungs-Maximum bei einer Dehnung von 4,6 % bei -20 °C und bei 4,8 % bei -30 °C und dem Reißen der Probe bei einer Dehnung von 15 % bei -20 °C und bei 12 % bei -30 °C beobachtet wird.

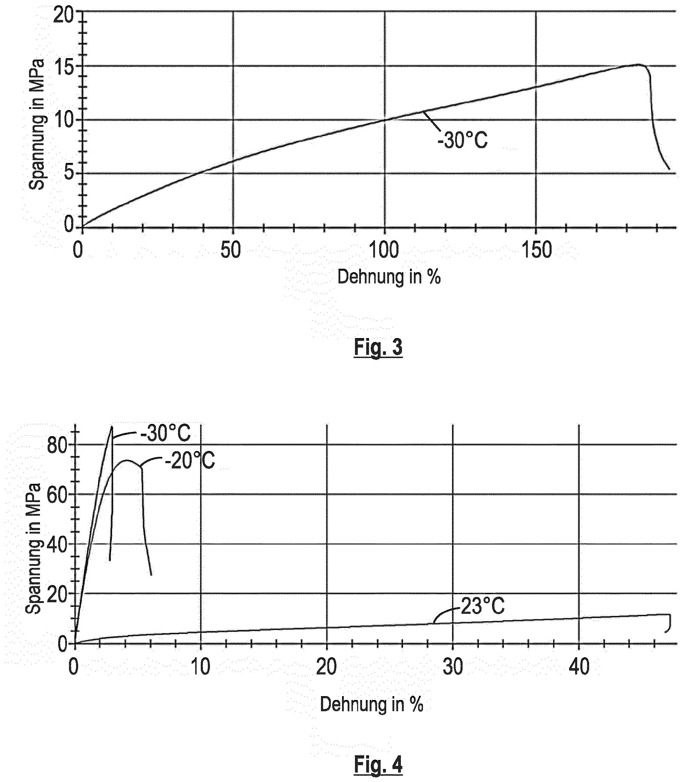

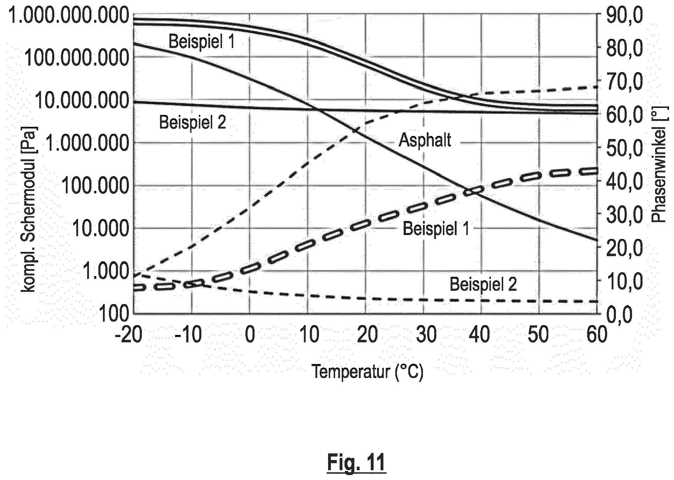

Fig. 2 zeigt eine Spannung-Dehnungs-Kurven für Beispiel 2 bei 23 °C des Polyurea-basierten Bindemittels im ausgehärteten Zustand. Fig. 3 zeigt eine Spannung-Dehnungs-Kurven für Beispiel 2 bei -30 °C des Polyurea-basierten Bindemittels im ausgehärteten Zustand. Wie anhand der unten näher beschriebenen DSR-Messung aus Fig. 11 gezeigt, weist das erfindungsgemäße Bindemittel nach Beispiel 2 eine hohe Elastizität auf, wobei nahezu kein viskoelastisches Verhalten vorliegt.

Bei den Spannung-Dehnungs-Kurven basierend auf Proben des ausgehärteten Bindemittels des Vergleichsbeispiels sind in Fig. 4 gezeigt. Es lässt sich erkennen, dass bei 23 °C zwar eine Reißdehnung von 47 % vorliegt, was geringer ist als bei den erfindungsgemäßen Beispielen 1 und 2, jedoch bei tieferen Temperaturen diese deutlich abnimmt, wobei eine viskose Längenänderung nicht beobachtet werden konnte. Vielmehr verhielten sich die Proben des Vergleichsbeispiels verhältnismäßig spröde bei tiefen Temperaturen von -20 °C und -30 °C, was anhand des Übereinstimmens von Reißdehnung und Streckdehnung in Fig. 4 erkennbar ist.

Das viskoelastische und elastische Verhalten der erfindungsgemäßen Beispiele selbst bei tiefen Temperaturen lässt die Schlussfolgerung zu, dass das verfüllte Traggerüst, d. h. das erfindungsgemäße Kompositmaterial, ausgezeichnete Rissüberbrückungseigenschaft besitzt.

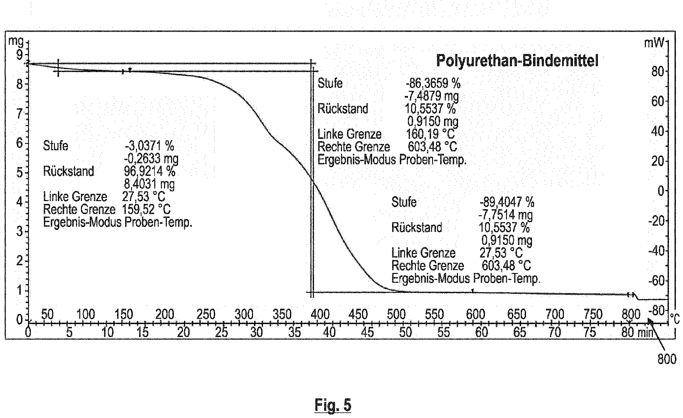

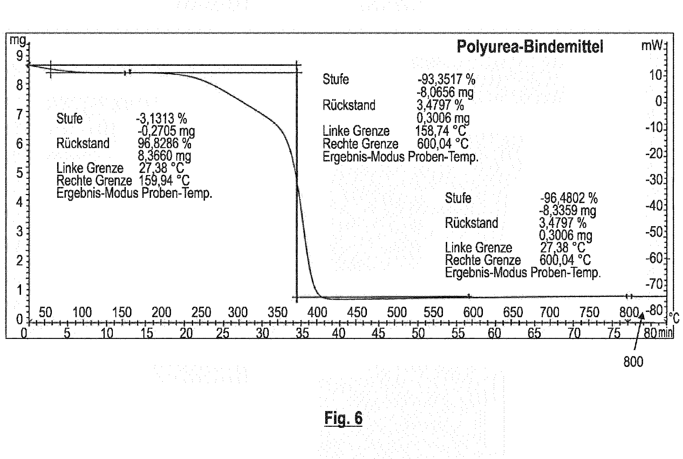

In Fig. 5, 6 und 7 sind thermogravimetrische Analysen der beispielhaften Bindemittel im nicht ausgehärteten Zustand gezeigt. Die Kurven wurden mit einer Aufheizrate von 5 K/min unter einer Stickstoffatmosphäre aufgenommen. Ein Gewichtsverlust von bis zu 5 % resultiert aus einem Verdampfen von Weichmachern und Lösemitteln, welche aus den zugesetzten Additiven resultieren. Eine Degradierung des Bindemittels ist bei einem derartigen Gewichtsverlust nicht zu erwarten, insbesondere wenn nach einem anfänglichen Gewichtsverlust sich ein Plateau einstellt, bei welchem das Gewicht über einen gewissen Temperaturbereich nahezu konstant bleibt, wie in Fig. 5 und 6 erkennbar.

Fig. 5 zeigt die thermogravimetrische Analyse eines Bindemittels nach Beispiel 1. Zwischen 27,5 - 160 °C ist ein Gewichtsverlust von lediglich 3,0 % beobachtbar, was auf eine zumindest kurzzeitige hohe Temperaturbeständigkeit hinweist. Der Gewichtsverlust von 160 - 603 °C beträgt 86,4 %. Der Gewichtsverlust von 27,5-603 °C beträgt 89,4 %. Bei 200 °C beträgt der beobachtete Gewichtsverlust lediglich 3,6 %.

Die in Fig. 6 gezeigte Kurve wurde anhand eines Bindemittels nach Beispiel 2 aufgenommen. Auch hier ist zwischen 27,4 - 160 °C lediglich ein geringer Gewichtsverlust beobachtbar, d. h. von lediglich 3,1 %. Es kann daher auch für die Bindemittel nach Beispiel 2 von einer hohen kurzzeitigen Temperaturbeständigkeit ausgegangen werden. Der Gewichtsverlust von 159 - 600 °C beträgt 93,4 %. Der Gewichtsverlust von 27,5 - 603 °C beträgt 96,5 %. Bei 200 °C beträgt der beobachtete Gewichtsverlust lediglich 3,1 %.

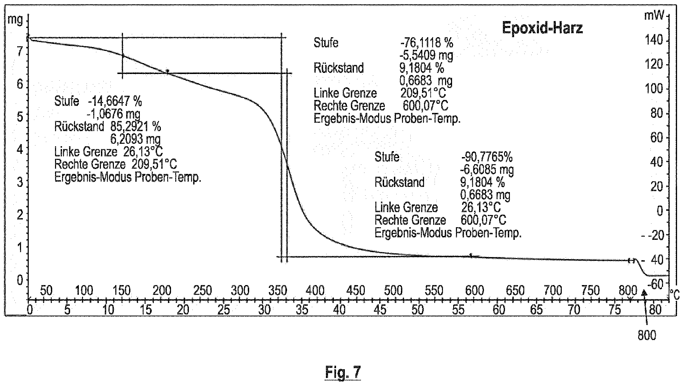

Im Gegensatz dazu zeigt sich in der Kurve von Fig. 7, welche mit dem Bindemittel des Vergleichsbeispiels aufgenommen wurde, ein deutlicher Gewichtsverlust, der bei geringen Temperaturen einsetzt und sich nahezu kontinuierlich fortsetzt. Bei etwa 210 °C lässt sich ein Wendepunkt in der Kurve erkennen, wobei bis zu diesem Wendepunkt der Gewichtsverlust 14,7 % beträgt. Bei 200 °C beträgt der beobachtete Gewichtsverlust bereits etwa 14 %.

Der Gewichtsverlust bei 200 °C ist von Interesse, da dies im Bereich der Verarbeitungstemperatur von Asphalt liegt. Der bei den Beispielen 1 und 2 beobachtete geringe Gewichtsverlust von kleiner 5 % weist darauf hin, dass die erfindungsgemäßen Bindemittel bei diesen Temperaturen zumindest kurzzeitig stabil sind.

Der Vergleich des Epoxid-basierten Bindemittels des Vergleichsbeispiels mit den Bindemitteln der erfindungsgemäßen Beispiele zeigt, dass die erfindungsgemäßen Beispiele eine gegenüber Epoxid-basierten Bindemitteln erhöhte Temperaturstabilität aufweisen, siehe Fig. 5 bis 7. Die Polyurethan- bzw. Polyurea-basierten Bindemittelsysteme (Fig. 5 und 6) haben eine kurzzeitige Temperaturstabilität von bis zu 200 °C, wobei eine Zersetzung erst deutlich oberhalb von 200 °C zu beobachten ist. Eine dauerhafte Temperaturstabilität von bis zu 80 °C liegt für die erfindungsgemäßen Systeme vor. Kurzzeitige Temperaturstabilitäten von bis zu 140 °C, insbesondere von bis zu 160 °C, noch weiter insbesondere von bis zu 200 °C sind vorteilhaft, sofern die Bindemittel in ein noch heißes Traggerüst verfüllt werden oder das erfindungsgemäße Kompositmaterial nach der Verfüllung mit weiteren Schichten, insbesondere mit Asphaltschichten, bedeckt wird.

Bei dem Epoxid-basierten System des Vergleichsbeispiels hingegen ist bereits bei 124 °C ein Gewichtsverlust von 5 % beobachtbar, der Gewichtsverlust zwischen 26 - 209 °C kann auf das Verdampfen von Additiven und Benzylalkohol oder Weichmacher zurückgeführt werden. Damit einhergehend ist ein deutlicher Schrumpf des Epoxid-basierten Systems zu erwarten. Auch eine Abnahme der Flexibilität, insbesondere der Tieftemperaturflexibilität ist nach dem Verdampfen der Weichmacher denkbar.

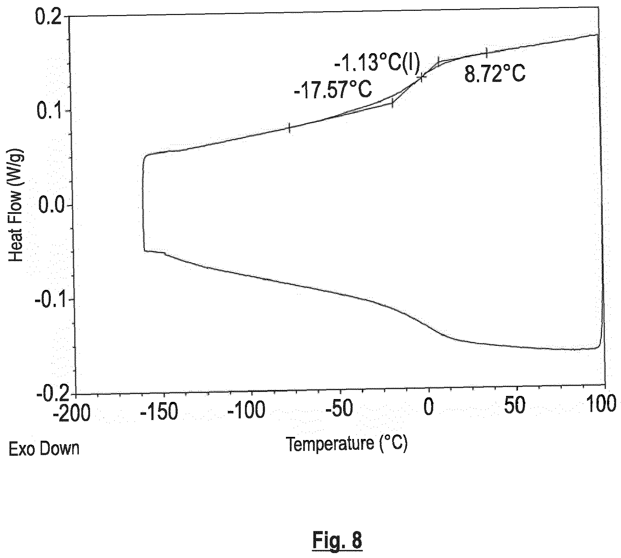

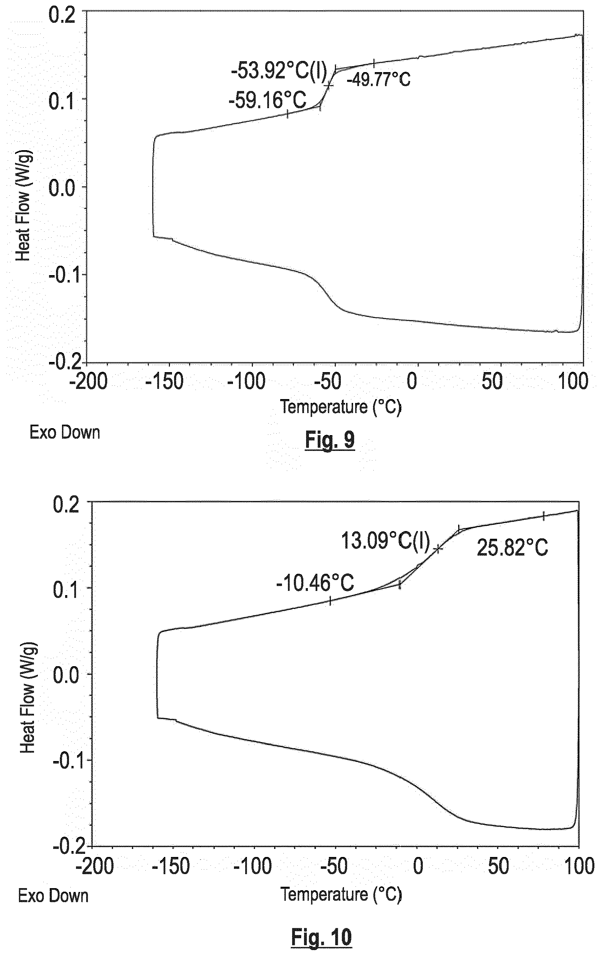

Fig. 8 und 9 zeigen DSC-Kurven der erfindungsgemäßen Bindemittel der Beispiele 1 und 2. Fig. 10 zeigt eine DSC-Kurve des Epoxid-basierten Bindemittels des Vergleichsbeispiels. Die Tg von -1,13 °C (Beispiel 1) bzw. -53,91 °C (Beispiel 2) entspricht dem Wendepunkt der deutlich ausgeprägten Stufen der DSC-Kurven. Gleiches gilt für das Epoxid-Basierte Bindemittel des Vergleichsbeispiels, dessen DSC-Kurve in Fig. 10 gezeigt ist, wobei die Tg hier mit 13,09 °C deutlich höher liegt. Die Tg wird anhand der während des Aufheizens der Probe aufgezeichneten Kurve bestimmt. Bei den gezeigten Kurven erfolgte das Aufheizen mit einer Rate von 10 K/min.

Bei den in Fig. 11 gezeigten DSR-Messungen, wobei DSR für Dynamisches Scherrheometer steht, sind die Verläufe des Phasenwinkels als gestrichelte Linien sowie die Verläufe des komplexen Schermoduls als durchgezogenen Linien dargestellt. Die Messungen erfolgten mit einem Temperaturverlauf von 60 °C bis -20 °C, unter oszillierender Beanspruchung mit einer Schubspannung von 500 Pa bei einer Frequenz von 10 rad/s und einer Zugkraft von 0,05 N. Gegenübergestellt sind in Fig. 11 die DSR-Messungen der erfindungsgemäßen Beispiele 1 und 2 sowie von Asphalt. Ein Phasenwinkel von 0° entspricht einem ideal elastischen Verhalten (vollständige Rückstellung), wohingegen ein Phasenwinkel von 90° einem vollkommen viskosen Verhalten (keine Rückstellung) entspricht. Bei 45° liegt ein viskoelastisches Verhalten vor. Die Bindemittel der Beispiele 1 und 2 sowie Asphalt weisen bei niedrigen Temperaturen einen sehr niedrigen Phasenwinkel von etwa 10° auf, was auf ein nahezu vollkommen elastisches Verhalten mit viskoelastischen Anteilen hinweist. Bei höheren Temperaturen nimmt insbesondere für Beispiel 1 der Phasenwinkel merklich zu, insbesondere ab einem Überschreiten der Tg. Bei 60 °C liegt der Phasenwinkel des Beispiels 1 bei etwa 43°, d. h. das Bindemittel verhält sich viskoelastisch. Hingegen behält das Bindemittel des Beispiels 2 seine nahezu ideal elastischen Eigenschaften über den gesamten gemessene Temperaturbereich von -20 - 60 °C. Asphalt zeigt bereits ab 10 °C ein viskoelastisches Verhalten, welches mit weiter steigender Temperatur zunehmend viskoser wird. Die durchgezogenen Linien in Fig. 11 zeigen den komplexen Schermodul, der als Indikation für die Härte und Zähigkeit eines Materials dient. Das Urethan-basierte Bindemittel des Beispiel 1 ist bei tiefen Temperaturen, insbesondere unterhalb der Tg, sehr zäh. Beim Überschreiten der Tg nimmt die Zähigkeit etwas ab, bleibt jedoch auf einem hohen Niveau, welches deutlich oberhalb dem von Asphalt liegt. Das Urea-basierte Bindemittel zeigt über den gesamten gemessenen Temperaturbereich von -20 - 60 °C eine auf einem hohen Niveau liegendes komplexes Schermodul. Ab Temperaturen von oberhalb etwa 12 °C ist das komplexe Schermodul des erfindungsgemäßen Beispiels 2 oberhalb dessen von Asphalt. Insbesondere bei hohen Temperaturen weisen beide erfindungsgemäßen Beispiele eine im Vergleich zu Asphalt deutlich höhere Zähigkeit auf. Dies kann als Hinweis darauf verstanden werden, dass die Neigung zur Spurrillenbildung im Vergleich zu Asphalt verringert ist.

## Patentansprüche

1. Kompositmaterial, für die Abdichtung von Fahrbahnen, umfassend eine poröses Traggerüst, dessen Poren mit einem Bindemittel verfüllt sind,
wobei das ausgehärtete Bindemittel eine Glasübergangstemperatur (Tg) von kleiner gleich 10 °C, insbesondere kleiner gleich 5 °C, aufweist und/oder wobei das rheologische Verhalten des Bindemittels im unausgehärteten Zustand thixotrop ist.

2. Kompositmaterial nach Anspruch 1,
wobei das Bindemittel ein polymeres Bindemittel ist und/oder wobei das poröse Traggerüst eine bituminös gebundene Asphaltkörnung ist.

3. Kompositmaterial nach Anspruch 1 oder 2,
wobei die Tg des ausgehärteten Bindemittels kleiner gleich 0 °C, bevorzugt kleiner gleich -5 °C, besonders bevorzugt kleiner gleich -10 °C, noch weiter bevorzugt kleiner gleich -20 °C, höchst bevorzugt kleiner gleich -30 °C beträgt.

4. Kompositmaterial nach einem der vorstehenden Ansprüche,
wobei das poröse Traggerüst eine poröse Asphalt-Schicht ist, bevorzugt mit einer Porosität von 10 - 40 Vol.-%, bevorzugter mit einer Porosität von 17 - 25 Vol.-%.

5. Kompositmaterial nach einem der vorstehenden Ansprüche,
wobei das Bindemittel ausgewählt ist aus der Gruppe bestehend aus Polyurethan-, Polyurea-, Polyaspartic- und PMMA-basierten Harzen, Siliconen, Silan-terminierten Polyurethanen, Polyisocyanaten und deren Präpolymere sowie aus Hybriden der genannten Bindemittel, vorzugsweise bestehend aus Polyurethan-, Polyurea-, und PMMA-basierten Harzen sowie aus Hybriden der genannten Bindemittel.

6. Kompositmaterial nach einem der vorstehenden Ansprüche,
wobei das Bindemittel ein Mehrkomponentensystem ist, insbesondere ein 2-Komponentensystem.

7. Kompositmaterial nach einem der vorstehenden Ansprüche,
wobei das ausgehärtete Bindemittel ein mit einem Diisocyanat-basierten Härter, insbesondere einem MDI-Präpolymer oder einem TDI-Präpolymer, gehärtetes Polyurethan ist, wobei das Polyurethan vorzugsweise modifiziert ist, insbesondere mit Styrol-Acrylnitril oder mit einem Polyharnstoff, vorzugsweise mit einem Polyharnstoff,
wobei der Diisocyanat-basierte Härter vorzugsweise ein zahlengemitteltes Molekulargewicht im Bereich von 250 - 3500 g/mol aufweist.

8. Kompositmaterial nach einem der vorstehenden Ansprüche,
wobei das ausgehärtete Bindemittel ein Polyurea-Material ist, welches Amin-basiert ist und mit einem Diisocyanat-basierten Härter, insbesondere MDI-Präpolymer oder TDI-Präpolymer, bevorzugt TDI-Präpolymer, gehärtet ist,
wobei der Diisocyanat-basierte Härter vorzugsweise ein zahlengemitteltes Molekulargewicht im Bereich von 250 - 3500 g/mol aufweist.

9. Kompositmaterial nach einem der vorstehenden Ansprüche,
wobei das Bindemittel im Wesentlichen nicht auf Epoxidharzen basiert.

10. Kompositmaterial nach einem der vorstehenden Ansprüche,
wobei dem Bindemittel ein Thixotropiemittel zugesetzt ist.

11. Kompositmaterial nach einem der vorstehenden Ansprüche,
wobei das Bindemittel im ausgehärteten Zustand eine Reißdehnung von größer gleich 50 % bei Raumtemperatur aufweist, und/oder
wobei das Bindemittel im ausgehärteten Zustand eine Reißdehnung von größer gleich 4 % bei -20 °C aufweist, und/oder
wobei die Rissüberbrückungsfähigkeit des Kompositmaterials nach dem Aushärten des Bindemittels größer 0,1 mm bei -30 °C beträgt und/oder wobei die Rissüberbrückungsfähigkeit des Kompositmaterials größer gleich 0,2 mm bei 20 °C beträgt, und/oder
wobei das Bindemittel eine dauerhafte Temperaturstabilität bis 80 °C, insbesondere bis 90 °C, aufweist und/oder wobei das Bindemittel eine kurzzeitige Temperaturstabilität bis 140 °C, insbesondere bis 160 °C, noch weiter insbesondere bis 200 °C, aufweist.

12. Abdichtungssytem, umfassend ein Kompositmaterial nach einem der vorstehenden Ansprüche.

13. Straßenbauwerk, umfassend ein Abdichtungssystem nach Anspruch 12,
wobei das Kompositmaterial als Abdichtungsschicht zwischen der Bauwerksstruktur und einem auf dem Kompositmaterial aufgebrachten Fahrbahnbelag angeordnet ist,
wobei das Straßenbauwerk vorzugsweise eine Stahl-, Beton- oder Holzbrücke ist, und/oder
wobei das Kompositmaterial zumindest abschnittsweise ohne weitere Grundierung auf der Bauwerksstruktur aufgebracht ist.

14. Verwendung eines Bindemittels zur nachträglichen Verfüllung einer porösen Tragstruktur bei der Herstellung eines Abdichtungssystems, insbesondere nach Anspruch 12, wobei das ausgehärtete Bindemittel eine Glasübergangstemperatur (Tg) von kleiner gleich 0 °C, insbesondere kleiner gleich -5 °C, aufweist und/oder wobei das rheologische Verhalten des Bindemittels im unausgehärteten Zustand thixotrop ist.

15. Verfahren zum Bereitstellen eines Abdichtungssystems nach Anspruch 12, insbesondere bei der Sanierung eines Bauwerks, wie zum Beispiel einem Brückenbauwerk, wobei auf einer bestehenden Gebäudestruktur zunächst eine poröse Tragstruktur bereitgestellt wird, welche anschließend mit einem unausgehärteten Bindemittel verfüllt wird, wobei eine Glasübergangstemperatur (Tg) des Bindemittels so eingestellt ist, dass diese im ausgehärteten Zustand des Bindemittels kleiner gleich 0 °C, insbesondere kleiner gleich -5 °C, beträgt und/oder das rheologische Verhalten des Bindemittels im unausgehärteten Zustand so eingestellt ist, dass sich das Bindemittel thixotrop verhält.
